# EUROPEAN PATENT APPLICATION

(11) **EP 3 920 543 A1**
(43) Date of publication of application: **08.12.2021**
(21) Application number: 21174083.2
(22) Date of filing: 17.05.2021
(51) Int. Cl.: H04N 21/4788, H04N 21/414, H04N 21/4223, H04N 21/2743, H04N 21/81, H04N 21/854, H04N 21/234

(54) **POST CAPTURE EDIT AND DRAFT**

(30) Priority: 01.06.2020 US 202063033075 P; 13.01.2021 US 202117248194
(71) Applicant: Facebook, Inc., Menlo Park, CA 94025 (US)
(72) Inventor: WONG, Kevin J., Menlo Park (US); ORTEGA, Martin A., Menlo Park (US); SHENOY, Sanjeev, Menlo Park (US); JUNG, Hyun Woo, Menlo Park (US)
(74) Representative: Murgitroyd & Company

(57) **Abstract**

Techniques are described herein that enable and assist a user to generate customized video content and alter the video content without altering the customizations. For example, a social networking system may receive, from a user account associated with the social networking system, an input to create video content and add visual customizations to the video content. In some examples, the social networking system may also receive input from the user to alter the video content by altering the length of the video clip and/or adding a second video clip. The social networking system then alters the video content while maintain the previous customizations. The social networking system may then save the altered video content as a draft or share the altered video content to other users on the social networking system.

## Description

This application claims the benefit of priority to U.S. Provisional Application No. 63/033,075, filed June 1, 2020, and U.S. Non-Provisional Application No. 17/248,194, filed January 13, 2021, which are incorporated herein by reference.

### BACKGROUND

Social networking platforms allow users to share content with one another. Users may share content such as images, audio, video, text, and other content types. Often times, functionality is limited within a social media platform for how to customize items that a user desires to share. Additionally, a user may desire to save content before sharing with other users, and further edit the content without losing customization.

### SUMMARY

While conventional social networking platforms allow users to share content with one another, they are not without limitations. In some cases, a user may not only want to add customizations to content items to share with others, but the user may want to save various drafts of the customized content item prior to sharing. As discussed above, social networking platforms allow users to connect with one another by sharing content such as images, audio, video, and text, to name a few examples. By sharing customized content items with followers on social media, users may be encouraged to connect with one another by expressing their creativity. Thus, the described techniques provide functionality beyond what is provided in conventional social networking platforms by allowing users to customize content items to share with other users and save and/or revise a version of those customizations prior to sharing.

This application describes techniques and features for generating customized video content to be shared via a social networking system and/or service (herein referred to as "social networking system") and saving the customized content as a draft. Additionally, this application describes techniques for further editing the draft video content without altering the customization.

For instance, a social networking system may operate a service that corresponds to a dedicated social media application installed on a user device. The social networking system may enable users to share content via the social media application installed on the user device. In some cases, the shared content may be accessed (e.g., viewed) by devices associated with other users that also have the social media application installed on their respective devices. The social networking system may store account information associated with each user and the respective device on which the social media application is installed. In some examples, the application may be a web application that is accessed by a computing device (e.g., mobile device, desktop computer, laptop computer, etc.) via a web browser.

In some examples, a social networking system may receive, from a first user account, a first input to create a video content item. The video content item may comprise a first video clip captured by a computing device, and may comprise multiple video clips stitched together to create one continuous video clip. The social networking system then receives a second user input from the first user account to add a visual customization to the video content item. The visual customization may include a text overlay, a sticker, a graphic interchange format (GIF), and/or an augmented reality (AR) effect, to name a few examples. In some cases, the social networking system receives a third user input from the first user account to alter the video content item. This may include shortening the length of the first video clip, and/or adding a second video clip before and/or after the first video clip. In response to the third user input, the social networking system may then alter the video content item without removing the visual customization. In some examples, the social networking system may receive a fourth user input from the first user account to share the video content item on the social networking system. The social networking system may then provide the video content item to a second user account based at least in part on the fourth user input. In this way, users may alter video clips included in the video content item without, for example, altering visual customizations previously made to the video clip(s) included in the video content item. Thus, the users may edit video clips included in the video content item while maintaining previously added visual customization.

In some examples, the social networking system may also receive a fifth user input to save the video content item as a draft prior to the fourth user input. The social networking system may further store the video content item comprising the video content and the visual customization as the draft. In some cases, the social networking system may receive a sixth user input to edit the draft. The social networking system may then provide the draft comprising the video content item and the visual customization for editing or sharing by the first user account. In this way, the user may continue to edit the video content item over a period of time without the risk of losing previous edits.

In some examples, the sixth user input to edit the draft includes removing at least a portion of the visual customization. For instance, the user may desire to alter or remove previously saved edits to the draft. In this way, users may undo changes to the draft which have previously been saved.

In some examples, the visual customization is one of multiple visual customizations supplied by the social networking system. For instance, the social networking system may present the user with an option to select a customization previously created by the social networking system and/or another user. Thus, by the social networking system supplying ready-to-use customizations, users may be more likely to try customizing their video content in various ways.

In some examples, the visual customization is selected to appear for a portion of the first video clip that is less than an entirety of a duration of the first video clip. For example, the visual customization may appear and/or disappear during the duration of the first video clip. In this way, users may further customize the video content item by specifying when to add and/or remove select customizations.

In some examples, the social networking system may further receive a fifth user input to save the video content item as a draft prior to the fourth user input. The social networking system may then receive a sixth user input to select a thumbnail image of the draft. The thumbnail image of the draft may be an image the user views before playing the video content item and may include a frame from the video content item and/or an image from a camera roll of a computing device associated with the user.

In this way, the social networking system allows users to create and edit video content items through the addition of visual customizations such as text overlays, stickers, augmented reality (AR) effects, and the like, without removing the visual customizations during the editing process. Additionally, the social networking system allows users to save and edit drafts of the video content item's visual customizations without losing previously added customizations.

According to a first aspect, there is provided a method comprising: receiving, by a social networking system from a first user account, a first user input to create a video content item, the video content item comprising at least a first video clip; receiving a second user input from the first user account to add a visual customization to the video content item; receiving a third user input from the first user account to alter the video content item, including at least one of: altering a length of the first video clip, or adding a second video clip before or after the first video clip, altering the video content item based at least in part on the third user input and without removing the visual customization; receiving a fourth user input from the first user account to share the video content item on the social networking system; and providing the video content item to a second user account based at least in part on the fourth user input.

The visual customization may comprise one or more of an augmented reality (AR) effect, a graphic interchange format (GIF), a sticker, or a text overlay.

The method may further comprise: receiving a fifth user input to save the video content item as a draft prior to the fourth user input; storing the video content item comprising the video content item and the visual customization as the draft; receiving a sixth user input to edit the draft; and providing the draft comprising the video content item and the visual customization for editing or sharing by the first user account. The sixth user input to edit the draft may include removing at least a portion of the visual customization.

The visual customization may be one of multiple visual customizations supplied by the social networking system.

The visual customization may be selected to appear for a portion of the first video clip that is less than an entirety of the first video clip.

The method may further comprise: receiving a fifth user input to save the video content item as a draft prior to the fourth user input; and receiving a sixth user input to select a thumbnail image of the draft; wherein the thumbnail image may be at least one of a frame from the video content item or an image retrieved from storage.

According to a second aspect, there is provided a system comprising: one or more processors; and one or more computer-readable media storing instructions that, when executed by the one or more processors, configure the system to perform operations comprising: receiving, by a social networking system from a first user account, a first user input to create a video content item, the video content item comprising at least a first video clip; receiving a second user input from the first user account to add a visual customization to the video content item; receiving a third user input from the first user account to alter the video content item, including at least one of: altering a length of the first video clip, or adding a second video clip before or after the first video clip, altering the video content item based at least in part on the third user input and without removing the visual customization; receiving a fourth user input from the first user account to share the video content item on the social networking system; and providing the video content item to a second user account based at least in part on the fourth user input.

The visual customization may comprises one or more of an augmented reality (AR) effect, a graphic interchange format (GIF), a sticker, or a text overlay.

The operations may further comprise: receiving a fifth user input to save the video content item as a draft prior to the fourth user input; storing the video content item comprising the video content item and the visual customization as the draft; receiving a sixth user input to edit the draft; and providing the draft comprising the video content item and the visual customization for editing or sharing by the first user account. The sixth user input to edit the draft may include removing at least a portion of the visual customization.

The visual customization may be one of multiple visual customizations supplied by the social networking system.

The visual customization may be selected to appear for a portion of the first video clip that is less than an entirety of the first video clip.

The operations may further comprise: receiving a fifth user input to save the video content item as a draft prior to the fourth user input; and receiving a sixth user input to select a thumbnail image of the draft; wherein the thumbnail image may be at least one of a frame from the video content item or an image from a camera roll.

According to a third aspect, there is provided one or more computer-readable media storing instructions that, when executed by one or more processors, configure the one or more processors to perform operations comprising: receiving, by a social networking system from a first user account, a first user input to create a video content item, the video content item comprising at least a first video clip; receiving a second user input from the first user account to add a visual customization to the video content item; receiving a third user input from the first user account to alter the video content item, including at least one of: altering a length of the first video clip, or adding a second video clip before or after the first video clip, altering the video content item based at least in part on the third user input and without removing the visual customization; receiving a fourth user input from the first user account to share the video content item on the social networking system; and providing the video content item to a second user account based at least in part on the fourth user input.

The visual customization may comprise one or more of an augmented reality (AR) effect, a graphic interchange format (GIF), a sticker, or a text overlay.

The operations may further comprise: receiving a fifth user input to save the video content item as a draft prior to the fourth user input; storing the video content item comprising the video content item and the visual customization as the draft; receiving a sixth user input to edit the draft; and providing the draft comprising the video content item and the visual customization for editing or sharing by the first user account. The sixth user input to edit the draft may include removing at least a portion of the visual customization.

The visual customization may be one of multiple visual customizations supplied by the social networking system.

The visual customization may be selected to appear for a portion of the first video clip that is less than an entirety of the first video clip.

These and other aspects are described further below with reference to the accompanying drawings. The drawings are merely example implementations and should not be construed to limit the scope of the claims. For example, while examples are illustrated in the context of a user interface for a mobile device, the techniques may be implemented using any computing device and the user interface may be adapted to the size, shape, and configuration of the particular computing device.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different figures indicates similar or identical components or features.
FIG. 1 is a schematic view of an example system usable to implement example techniques for post capture editing and drafting described herein.
FIGS. 2A - 2C illustrate example user interfaces for creating a video content item using the techniques described herein.
FIGS. 3A and 3B illustrate example user interfaces for customizing the video content item using the techniques described herein.
FIGS. 4A and 4B illustrate example user interfaces for providing additional customizations to the video content item using the techniques described herein.
FIGS. 5A - 5C illustrate example user interfaces for altering the video content item without altering existing customizations.
FIGS. 6A and 6B illustrate example user interfaces for saving and sharing a draft of the video content item using the techniques described herein.
FIG. 7 illustrates a flowchart outlining an example method for post capture editing and drafting of a video content item using the techniques described herein.
FIG. 8 is an example system and device that is usable to implement the techniques described herein.

### DETAILED DESCRIPTION

### EXAMPLE SYSTEM ARCHITECTURE

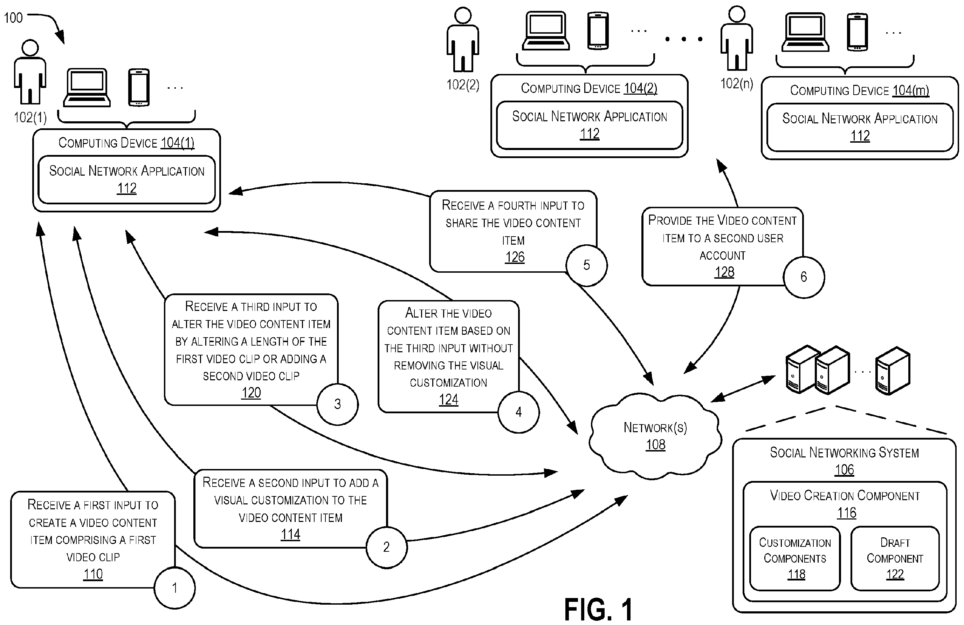

FIG. 1 is a schematic view of an example computing system 100 usable to implement example techniques described herein to facilitate post-capture editing and drafting on an application via the system 100. In some examples, the system 100 may include users 102(1), 102(2), ... 102(n) (collectively "users 102") to interact using computing devices 104(1), 104(2), 104(m) (collectively "computing devices 104") with a social networking system 106 via a network 108. In this example, n and m are non-zero integers greater than 1.

Each of the computing devices 104 includes one or more processors and memory storing computer executable instructions to implement the functionality discussed herein attributable to the various computing devices. In some examples, the computing devices 104 may include desktop computers, laptop computers, tablet computers, mobile devices (e.g., smart phones or other cellular or mobile phones, mobile gaming devices, portable media devices, etc.), or other suitable computing devices. The computing devices 104 may execute one or more client applications, such as a web browser (e.g., Microsoft Windows Internet Explorer, Mozilla Firefox, Apple Safari, Google Chrome, Opera, etc.) or a native or special-purpose client application (e.g., social media applications, messaging applications, email applications, games, etc.), to access and view content over the network 108.

The network 108 may represent a network or collection of networks (such as the Internet, a corporate intranet, a virtual private network (VPN), a local area network (LAN), a wireless local area network (WLAN), a cellular network, a wide area network (WAN), a metropolitan area network (MAN), or a combination of two or more such networks) over which the computing devices 104 may access the social networking system 106 and/or communicate with one another.

The social networking system 106 may include one or more servers or other computing devices, any or all of which may include one or more processors and memory storing computer executable instructions to implement the functionality discussed herein attributable to the social networking system or digital platform. The social networking system 106 may enable its users 102 (such as persons or organizations) to interact with the social networking system 106 and with each other via the computing devices 104. The social networking system 106 may, with input from a user, create and store in the social networking system 106 a user account associated with the user. The user account may include demographic information, communication-channel information, financial information and information on personal interests of the user. The social networking system 106 may also, with input from a user, create and store a record of relationships of the user with other users of the social networking system, as well as provide services (e.g., posts, comments, photo-sharing, messaging, tagging, mentioning of other users or entities, games, etc.) to facilitate social interaction between or among the users 102.

The social networking system 106 may be configured to generate custom video content to be shared between the users 102 via the computing devices 104.

For example, at operation 110 (indicated by "1"), a social network application 112 installed on the computing device 104(1) may receive a first input to create a video content item comprising a first video clip. In some examples, the social network application 112 may comprise video content creation functionality, such as accessing a camera of the computing device 104(1) to generate video clips, accessing storage of the computing device 104(1) and/or cloud storage (not explicitly pictured) to select video clips, adding visual customizations to video clips, adding audio customizations to video clips, and the like as described herein. In some cases, the first input may include selection of a "Reels" video content creation mode control associated with a video creation component 116 of the social networking system 106, where the "Reels" video content creation mode control enables the user 102(1) to create a video content item. For instance, the user 102(1) may be able to record a video clip using the camera of the computing device 104(1) to be included in the video content item directly by selecting the "Reels" video content creation mode control.

In some cases, the user 102(1) may select the "Reels" video content creation mode control to record a video clip. Alternatively or additionally, the user 102(1) may select the "Reels" video content creation mode multiple times to create multiple video clips to be included in a video content item. In some examples, the multiple video clips may be stitched together to create one continuous video clip to be included in a video content item. In some examples, by a two-finger "pinch" gesture, the user 102(1) may zoom in and/or out of the video frame while recording a video clip. Further, the user 102(1) may adjust the length of each video clip to be included in the video content item after the video clips have been recorded. As an illustrative example, the user 102(1) may take three 60-second video clips via the "Reels" video content creation mode. The user 102(1) may shorten each video clip by removing content (e.g., frames of video) from the beginning, the middle, and/or the end of the video clip. For example, the user 102(1) may remove the first fifteen seconds and the last fifteen seconds from each 60-second video clip. Each newly-edited 30-second video clip may be stitched together via the video creation component 116 to create one continuous 60-seocond video content item.

At operation 114 (indicated by "2"), the social networking system 106 may receive a second input to add a visual customization to the video content item. In some examples, the video creation component 116 may supply visual customizations from customization components 118 of the social networking system 106 to the social network application 112. Visual customizations may take a variety of forms, such as text overlay, stickers, GIFs, AR effects, and so forth.

In some examples, the user 102(1) may add a visual customization to the video content item such as an augmented reality (AR) effect (referred to herein as "effects"). For instance, when the user 102(1) selects the "Effects" control, the user 102(1) may be presented with an "Effects Browser" and presented with the options to search for effects stored in the customization components 118 of the social networking system 106. Additionally or alternatively, the user 102(1) may be presented with effects suggested specifically for the user 102(1). These suggested effects may include "Saved" effects that the user 102(1) had previously viewed and/or saved to an effects library created by the user 102(1) by selecting and saving effects from the customization components 118.

Additionally or alternatively, the "Effects Browser" may present the user 102(1) with "Trending" effects, including the name of the effect, the creator of the effect, and/or an image or icon relating to the trending effect. In some instances, "Trending" effects may be based on the effects that are the most popular in a specified time period (e.g., day, month, year), the most popular effects in a specific geographical area (e.g., state, country, globe), and the like. For instance, the "Trending" effects may include the top effects in the United States that have been used the most frequently by all users 102 within the United States in a 24 hour period. The "Effects Browser," for example, may include a select number of "Trending" effects (e.g., three, four, five, etc.) which may be displayed in order of popularity. Popularity, for example, may be based on a number of times the effect has been used, where the multiple trending effects may be displayed in order of descending number of uses. However, the "Effects Browser" may include a "See All" option in which the user 102(1) may browse a greater number of "Trending" effects (e.g., top 10, top 25, top 50, top 100, etc.).

In examples, the "Effects Browser" may also include an option for the user 102(1) to preview the effect before choosing to use that effect to customize the video content item. For example, the "Effects Browser" may include a "play" button next to the name of each effect which, when selected, displays at least a portion of a video content item that has included the effect. The user 102(1) may have seen an effect in another video content item but may not remember the title of the effect. Thus, the user 102(1) may easily browse effects to determine which effect to include in their visual customization.

Additionally or alternatively to adding effects, visual customization may include text overlay on a video content item and/or a portion of a video content item. For example, in a text feature of the "Reels" video content creation component, the user 102(1) may input custom text using a keyboard, speech, selection of suggested words/phrases, or other input methods. The user 102(1) may edit the text by, for example, changing the font of the text, highlighting the text, changing the color of the highlighting of the text, and/or hanging a background upon which the customized text will be displayed.

In some examples, the user 102(1) may select a "GIF Icon" as a visual customization in which the user 102(1) may add a graphics interchange format (GIF), a sticker, or an icon to the video content item. In some examples, the GIF, the sticker, and/or the icon may be customized to the user 102(1) based on the user's 102(1) location, time of day, day of the week, month, and/or year, and the like.

In some examples, the user 102(1) may adjust the position of the text, the GIF, the sticker, and/or the icon as it appears on the video content item. For example, the user 102(1) may increase or decrease the size of the text, the GIF, the sticker, and/or the icon by a two-touch gesture. Additionally or alternatively, the user 102(1) may adjust the positioning of the text, the GIF, the sticker, and/or the icon by holding and dragging the text, the GIF, the sticker, and/or the icon using a touch input to the desired position on the video content item.

In some examples, the visual customization may appear in only a portion of the video content item. As an illustrative example, in a 60-second video content item, the user 102(1) may desire to have different texts appear and/or disappear at different time segments of the video content item. In some examples, the video content item may include multiple visual customizations, where two or more of the visual customizations may overlap in at least a portion of the video content item.

At operation 120 (as indicated by a "3"), the social network application 112 receives a third input to alter the video content item by altering a length of the first video clip and/or adding a second video clip to the video content item. As mentioned above, the user 102(1) may want to change the video clip, and/or add another video clip, after adding a visual customization to the video content item, in order to prepare the video content item for sharing with other users 102(2) - 102(n). In some examples, a draft component 122 may save the video content item before the user 102(1) changes the first video clip and/or adds another video clip, with the visual customization added in the operation 114.

At operation 124 (indicated by "4"), the social network application 112 alters the video content item based on the third input without removing the visual customization. In some examples, altering the video content item may include altering the length of the first video clip and/or adding a second video clip. For example, once the user 102(1) has viewed the draft video content item, the user 102(1) may choose to shorten or lengthen at least one video clip included in the video content item. Additionally or alternatively, the user 102(1) may add a new (e.g., second, third, fourth, etc.) video clip to the video content item. For example, after saving the video content item including the visual customization(s) as a draft, the user 102(1) may desire to include one or more additional video clips in the video content item. Similar to operation 110, the user 102(1) may record a new video clip by selecting the "Reels" video content creation mode control. Additionally or alternatively, the social network application 112 may access a video clip to be included in the video content item from the camera of the computing device 104(1), storage of the computing device 104(1), cloud storage (not explicitly pictured), and so forth.

However, altering the video clips included in the video content item does not, in some examples, alter the visual customizations which were previously made to the video clip(s) included in the video content item. In other words, the user 102(1) may edit the clips included in the video content item without the risk of losing the visual customization(s) previously added.

Additionally, in some examples, once the user 102(1) has altered the video clip(s) included in the video content item, the user 102(1) may add (or remove) visual customizations to the video content item, as altered. The visual customizations may be the same or similar to the customization techniques described at operation 114. For example, visual customizations may include the addition of text overlay, GIFs, icons, stickers, and/or effects. Additionally or alternatively, the user 102(1) may continue to edit the customization included in the video content item at operation 114. For example, if the visual customization included in the video content item at operation 114 includes a text overly, the user 102(1) may edit the text of the text overlay after altering the video content item as described.

At operation 126 (as indicated by "5"), the social network application 112 may receive a fourth input from the user 102(1) to share the video content item, as customized, with the social network applications 112 installed on the computing devices 104(2) - 104(m), e.g., via the social networking system 106. In some examples, the user 102(1) may have the option to add a "caption" and/or a "hashtag" to the video content item before sharing. In some cases, the user 102(1) may desire to save the video content item as a draft again (e.g., in addition to sharing the video content item), for further editing.

At operation 128 (as indicated by a "6"), the social networking system 106 may provide the video content item to a second user account, e.g., a user account associated with the social network application 112 installed on the computing device 104(2). In some examples, the social network application 112 may display the video content item as part of a "Reels View," in a "Feed" of the second user account. The "Reels View," in some examples, may include a full-screen view of the completed video content item. In some cases, the "Reels View" may include video content items created and shared by other ones of the users 102. For example, a user 102(1) - 102(n) may view multiple video content items by swiping vertically (or horizontally), where each vertical (or horizontal) swipe may cause a different video content item to be displayed.

When the computing devices 104(2) - 104(m) display the video content item, the social network application 112 may allow the users 102(2) - 102(n) to interact with the video content item. For example, the social network application 112 may allow users to "like" or "comment" on the video content item. In some examples, the social networking system 106 may output responses by the users 102(2) - 102(n) and display the responses in association with the video content item to other ones of the user 102. For example, the users 102 may view the number of "likes" a video content item has received, which of the users 102 "liked" the video content item, the number of "comments" the users 102 left in response the to the video content item, and/or the "comments" themselves that the users 102 left in response the to the video content item. Additionally or alternatively, the users 102 may "direct message" or send the video content item to other ones of the users 102 to view.

In some examples, the users 102(2) - 102(n) may "follow" user 102(1). When followed, the users 102(2) - 102(n) may receive updates and/or notifications (e.g., push notifications) associated with the video content item, such as when other ones of the users 102(2) - 102(n) "like" and/or "comment" on the video content item. In some cases, the user 102(1) may receive a notification via the social network application 112 in response to one or more of the other users 102(2) - 102(n) interacting with the video content item.

In some examples, the "Reels Viewer" may display, in association with the video content item, a username associated with the user account of the user 102(1) that created the video content item, a "caption", and/or a "hashtag," associated with the video content item. Additionally or alternatively, upon determining that the video content item includes an effects customization, the "Reels Viewer" may include a selectable effect attribution indicating the name and/or creator of the effect. When selected, the selectable effect attribution may direct a user 102(2) to a page on the social networking system 106 where the user 102(2) can view other video content items that used the effect, and/or may provide the effect to the user 102(2) to use the effect in a video content item created by the user 102(2).

In some cases, the user 102(1) may select an option in a user interface displayed by the social network application 112 to save the video content item as a draft. For example, the user 102(1) may be presented the options to "Share" or "Save as Draft" in a user interface of the social network application 112. In some examples, saving the video content item as a draft may also save the first visual customization of the video content item. In other words, if the user 102(1) added a text overlay to appear within a specified time period in the video content item, the draft component may save the video content item with the text overlay that the user 102(1) made.

In some examples, the social network application 112 may receive an input to access the saved draft. For example, the draft may be saved in a "Draft Library," which may be stored by the draft component 122, the computing device 104(1), or elsewhere. In some examples, the user 102(1) may save multiple drafts in the "Draft Library" to be accessed at a later time. The "Draft Library" may be accessible at a profile page associated with a user account of the user 102(1). The "Draft Library" may for example, display the saved drafts in a grid, wherein each section of the grid contains a thumbnail image of the corresponding saved draft. In some examples, each one of the users 102 may have a unique "Draft Library" associated with user accounts of the individual users 102.

In some examples, the social network application 112 may receive an input to access the draft video content item. For example, the user 102(1) may select the desired draft from the "Draft Library" associated with a user account of the user 102(1). Once selected, the user 102(1) maybe presented with the draft video content item as viewed in the content creation mode, described at operation 114. In some examples, the draft video content item may contain the first customization that was applied at operation 114. For example, if the user 102(2) added text to the video content item before saving the video content item, the draft video content item may include the added text. Alternatively or additionally, the draft video content item may include the video content item as altered, such as with an altered length of the first video clip added to the video content item, a second video clip added to the first video clip in the video content item, and the like.

In some examples, the social networking system 106 may provide privacy features to the users 102 while interacting with the social networking system 106. In particular examples, one or more objects (e.g., content or other types of objects) of the computing system 100 may be associated with one or more privacy settings. The one or more objects may be stored on or otherwise associated with any suitable computing system or application, such as, for example, the social networking system 106, a client system, a third-party system, a social networking application, a messaging application, a photo-sharing application, or any other suitable computing system or application. Although the examples discussed herein are in the context of an online social network, these privacy settings may be applied to any other suitable computing system. Privacy settings (or "access settings") for an object or item of content may be stored in any suitable manner, such as, for example, in association with the object, in an index on an authorization server, in another suitable manner, or any suitable combination thereof. A privacy setting for an object may specify how the object (or particular information associated with the object) can be accessed, stored, or otherwise used (e.g., viewed, shared, modified, copied, executed, surfaced, or identified) within the online social network. When privacy settings for an object allow a particular user or other entity to access that object, the object may be described as being "visible" with respect to that user or other entity. As an example and not by way of limitation, a user of the online social network may specify privacy settings for a user-profile page that identify a set of users that may access work-experience information on the user-profile page, thus excluding other users from accessing that information.

In particular examples, privacy settings for an object may specify a "blocked list" and/or a "restricted list" of users or other entities that should not be allowed to access certain information associated with the object. In particular examples, the blocked list may include third-party entities. The blocked list or restricted list may specify one or more users or entities for which an object is not visible. As an example and not by way of limitation, a user may specify a set of users who may not access photo albums associated with the user, thus excluding those users from accessing the photo albums (while also possibly allowing certain users not within the specified set of users to access the photo albums). In particular examples, privacy settings may be associated with particular social-graph elements. Privacy settings of a social-graph element, such as a node or an edge, may specify how the social-graph element, information associated with the social-graph element, or objects associated with the social-graph element can be accessed using the online social network. As an example and not by way of limitation, a particular concept node corresponding to a particular photo may have a privacy setting specifying that the photo may be accessed only by users tagged in the photo and friends of the users tagged in the photo. In particular examples, privacy settings may allow users to opt in to or opt out of having their content, information, or actions stored/logged by the social-networking system or shared with other systems (e.g., a third-party system). Although this disclosure describes using particular privacy settings in a particular manner, this disclosure contemplates using any suitable privacy settings in any suitable manner.

In particular examples, privacy settings may be based on one or more nodes or edges of a social graph. A privacy setting may be specified for one or more edges or edge-types of the social graph, or with respect to one or more nodes or node-types of the social graph. The privacy settings applied to a particular edge connecting two nodes may control whether the relationship between the two entities corresponding to the nodes is visible to other users of the online social network. Similarly, the privacy settings applied to a particular node may control whether the user or concept corresponding to the node is visible to other users of the online social network. As an example and not by way of limitation, a user 102(1) may share an object to the social networking system 106. The object may be associated with a concept node connected to a user node of the user 102(1) by an edge. The user 102(1) may specify privacy settings that apply to a particular edge connecting to the concept node of the object, or may specify privacy settings that apply to all edges connecting to the concept node. In some examples, the user 102(1) may share a set of objects of a particular object-type (e.g., a set of images). The user 102(1) may specify privacy settings with respect to all objects associated with the user 102(1) of that particular object-type as having a particular privacy setting (e.g., specifying that all images posted by the user 102(1) are visible only to friends of the user and/or users tagged in the images).

In particular examples, the social networking system 106 may present a "privacy wizard" (e.g., within a webpage, a module, one or more dialog boxes, or any other suitable interface) to the user 102(1) to assist the user in specifying one or more privacy settings. The privacy wizard may display instructions, suitable privacy-related information, current privacy settings, one or more input fields for accepting one or more inputs from the first user specifying a change or confirmation of privacy settings, or any suitable combination thereof. In particular examples, the social networking system 106 may offer a "dashboard" functionality to the user 102(1) that may display, to the user 102(1), current privacy settings of the user 102(1). The dashboard functionality may be displayed to the user 102(1) at any appropriate time (e.g., following an input from the user 102(1) summoning the dashboard functionality, following the occurrence of a particular event or trigger action). The dashboard functionality may allow the user 102(1) to modify one or more of the user's current privacy settings at any time, in any suitable manner (e.g., redirecting the user 102(1) to the privacy wizard).

Privacy settings associated with an object may specify any suitable granularity of permitted access or denial of access. As an example and not by way of limitation, access or denial of access may be specified for particular users (e.g., only me, my roommates, my boss), users within a particular degree-of-separation (e.g., friends, friends-of-friends), user groups (e.g., the gaming club, my family), user networks (e.g., employees of particular employers, students or alumni of particular university), all users ("public"), no users ("private"), users of third-party systems, particular applications (e.g., third-party applications, external websites), other suitable entities, or any suitable combination thereof. Although this disclosure describes particular granularities of permitted access or denial of access, this disclosure contemplates any suitable granularities of permitted access or denial of access.

In particular examples, one or more servers of the social networking system 106 may be authorization/privacy servers for enforcing privacy settings. In response to a request from the user 102(1) (or other entity) for a particular object stored in a data store, the social networking system 106 may send a request to the data store for the object. The request may identify the user 102(1) associated with the request and the object may be sent only to the user 102(1) (or a client system of the user) if the authorization server determines that the user 102(1) is authorized to access the object based on the privacy settings associated with the object. If the requesting user is not authorized to access the object, the authorization server may prevent the requested object from being retrieved from the data store or may prevent the requested object from being sent to the user. In the search-query context, an object may be provided as a search result only if the querying user is authorized to access the object, e.g., if the privacy settings for the object allow it to be surfaced to, discovered by, or otherwise visible to the querying user. In particular examples, an object may represent content that is visible to a user through a newsfeed of the user. As an example and not by way of limitation, one or more objects may be visible to a user's "Trending" page. In particular examples, an object may correspond to a particular user. The object may be content associated with the particular user, or may be the particular user's account or information stored on the social networking system 106, or other computing system. As an example and not by way of limitation, the user 102(1) may view one or more other users 102(2) ... 102(n) of an online social network through a "People You May Know" function of the online social network, or by viewing a list of friends of the user 102(1). As an example and not by way of limitation, the user 102(1) may specify that they do not wish to see objects associated with a particular other user (e.g., the user 102(2)) in their newsfeed or friends list. If the privacy settings for the object do not allow it to be surfaced to, discovered by, or visible to the user 102(1), the object may be excluded from the search results. Although this disclosure describes enforcing privacy settings in a particular manner, this disclosure contemplates enforcing privacy settings in any suitable manner.

In particular examples, different objects of the same type associated with a user may have different privacy settings. Different types of objects associated with a user may also have different types of privacy settings. As an example and not by way of limitation, the user 102(1) may specify that the user's status updates are public, but any images shared by the user are visible only to the user's friends on the online social network. In some examples, the user 102(1) may specify different privacy settings for different types of entities, such as individual users, friends-of-friends, followers, user groups, or corporate entities. In some examples, the user 102(1) may specify a group of users that may view videos posted by the user 102(1), while keeping the videos from being visible to the user's employer. In particular examples, different privacy settings may be provided for different user groups or user demographics. As an example and not by way of limitation, the user 102(1) may specify that other users who attend the same university as the user 102(1) may view the user's pictures, but that other users who are family members of the user 102(1) may not view those same pictures.

In particular examples, the social networking system 106 may provide one or more default privacy settings for each object of a particular object-type. A privacy setting for an object that is set to a default may be changed by a user associated with that object. As an example and not by way of limitation, all images posted by the user 102(1) may have a default privacy setting of being visible only to friends of the first user and, for a particular image, the user 102(1) may change the privacy setting for the image to be visible to friends and friends-of-friends.

In particular examples, privacy settings may allow the user 102(1) to specify (e.g., by opting out, by not opting in) whether the social networking system 106 may receive, collect, log, or store particular objects or information associated with the user 102(1) for any purpose. In particular examples, privacy settings may allow the user 102(1) to specify whether particular applications or processes may access, store, or use particular objects or information associated with the user. The privacy settings may allow the user 102(1) to opt in or opt out of having objects or information accessed, stored, or used by specific applications or processes. The social networking system 106 may access such information in order to provide a particular function or service to the user 102(1), without the social networking system 106 having access to that information for any other purposes. Before accessing, storing, or using such objects or information, the social networking system 106 may prompt the user 102(1) to provide privacy settings specifying which applications or processes, if any, may access, store, or use the object or information prior to allowing any such action. As an example and not by way of limitation, the user 102(1) may transmit a message to the user 102(2) via an application related to the online social network (e.g., a messaging app), and may specify privacy settings that such messages should not be stored by the social networking system 106.

In particular examples, the user 102(1) may specify whether particular types of objects or information associated with the user 102(1) may be accessed, stored, or used by the social networking system 106. As an example and not by way of limitation, the user 102(1) may specify that images sent by the user 102(1) through the social networking system 106 may not be stored by the social networking system 106. In some examples, the user 102(1) may specify that messages sent from the user 102(1) to another user 102(2) may not be stored by the social networking system 106. In some cases, the user 102(1) may specify that all objects sent via a particular application may be saved by the social networking system 106.

In particular examples, privacy settings may allow the user 102(1) to specify whether particular objects or information associated with the user 102(1) may be accessed from particular client systems or third-party systems. The privacy settings may allow the user 102(1) to opt in or opt out of having objects or information accessed from a particular device (e.g., the phone book on a user's smart phone), from a particular application (e.g., a messaging app), or from a particular system (e.g., an email server). The social networking system 106 may provide default privacy settings with respect to each device, system, or application, and/or the user 102(1) may be prompted to specify a particular privacy setting for each context. As an example and not by way of limitation, the user 102(1) may utilize a location-services feature of the social networking system 106 to provide recommendations for restaurants or other places in proximity to the user 102(1). The default privacy settings of the user 102(1) may specify that the social networking system 106 may use location information provided from the computing device 104(1) of the user 102(1) to provide the location-based services, but that the social networking system 106 may not store the location information of the user 102(1) or provide it to any third-party system. The user 102(1) may then update the privacy settings to allow location information to be used by a third-party image-sharing application in order to geo-tag photos.

In particular examples, privacy settings may allow a user to engage in the ephemeral sharing of objects on the online social network. Ephemeral sharing refers to the sharing of objects (e.g., posts, photos) or information for a finite period of time. Access or denial of access to the objects or information may be specified by time or date. As an example and not by way of limitation, a user may specify that a particular image uploaded by the user is visible to the user's friends for the next week, after which time the image may no longer be accessible to other users. In some examples, a company may post content related to a product release ahead of the official launch, and specify that the content may not be visible to other users until after the product launch.

In particular examples, for particular objects or information having privacy settings specifying that they are ephemeral, the social networking system 106 may be restricted in its access, storage, or use of the objects or information. The social networking system 106 may temporarily access, store, or use these particular objects or information in order to facilitate particular actions of a user associated with the objects or information, and may subsequently delete the objects or information, as specified by the respective privacy settings. As an example and not by way of limitation, the user 102(1) may transmit a message to the user 102(2), and the social networking system 106 may temporarily store the message in a data store until the user 102(2) has viewed or downloaded the message, at which point the social networking system 106 may delete the message from the data store. In some examples, continuing with the prior example, the message may be stored for a specified period of time (e.g., 2 weeks), after which point the social networking system 106 may delete the message from the data store.

In particular examples, changes to privacy settings may take effect retroactively, affecting the visibility of objects and content shared prior to the change. As an example and not by way of limitation, the user 102(1) may share a first image and specify that the first image is to be public to all other users. At a later time, the user 102(1) may specify that any images shared by the user 102(1) should be made visible only to a first user group. The social networking system 106 may determine that this privacy setting also applies to the first image and make the first image visible only to the first user group. In particular examples, the change in privacy settings may take effect only going forward. Continuing the example above, if the user 102(1) changes privacy settings and then shares a second image, the second image may be visible only to the first user group, but the first image may remain visible to all users. In particular examples, in response to a user action to change a privacy setting, the social networking system 106 may further prompt the user to indicate whether the user wants to apply the changes to the privacy setting retroactively. In particular examples, a user change to privacy settings may be a one-off change specific to one object. In particular examples, a user change to privacy may be a global change for all objects associated with the user.

In particular examples, the social networking system 106 may determine that user 102(1) may want to change one or more privacy settings in response to a trigger action associated with the user 102(1). The trigger action may be any suitable action on the online social network. As an example and not by way of limitation, a trigger action may be a change in the relationship between a first and second user of the online social network (e.g., "un-friending" a user, changing the relationship status between the users, etc.). In particular examples, upon determining that a trigger action has occurred, the social networking system 106 may prompt the user 102(1) to change the privacy settings regarding the visibility of objects associated with the user 102(1). The prompt may redirect the user 102(1) to a workflow process for editing privacy settings with respect to one or more entities associated with the trigger action. The privacy settings associated with the user 102(1) may be changed only in response to an explicit input from the user 102(1), and may not be changed without the approval of the user 102(1). As an example and not by way of limitation, the workflow process may include providing the user 102(1) with the current privacy settings with respect to the user 102(2) or to a group of users (e.g., un-tagging the user 102(1) or the user 102(2) from particular objects, changing the visibility of particular objects with respect to the user 102(2) or a group of users), and receiving an indication from the user 102(1) to change the privacy settings based on any of the methods described herein, or to keep the existing privacy settings.

In particular examples, a user may need to provide verification of a privacy setting before allowing the user to perform particular actions on the online social network, or to provide verification before changing a particular privacy setting. When performing particular actions or changing a particular privacy setting, a prompt may be presented to the user to remind the user of his or her current privacy settings and to ask the user to verify the privacy settings with respect to the particular action. Furthermore, a user may need to provide confirmation, double-confirmation, authentication, or other suitable types of verification before proceeding with the particular action, and the action may not be complete until such verification is provided. As an example and not by way of limitation, a user's default privacy settings may indicate that a person's relationship status is visible to all users (i.e., "public"). However, if the user changes his or her relationship status, the social networking system 106 may determine that such action may be sensitive and may prompt the user to confirm that his or her relationship status should remain public before proceeding. In some examples, a user's privacy settings may specify that the user's posts are visible only to friends of the user. However, if the user changes the privacy setting for his or her posts to being public, the social networking system 106 may prompt the user with a reminder of the user's current privacy settings of posts being visible only to friends, and a warning that this change will make all of the user's past posts visible to the public. The user may then be required to provide a second verification, input authentication credentials, or provide other types of verification before proceeding with the change in privacy settings. In particular examples, a user may need to provide verification of a privacy setting on a periodic basis. A prompt or reminder may be periodically sent to the user based either on time elapsed or a number of user actions. As an example and not by way of limitation, the social networking system 106 may send a reminder to the user to confirm his or her privacy settings every six months or after every ten photo posts. In particular examples, privacy settings may also allow users to control access to the objects or information on a per-request basis. As an example and not by way of limitation, the social networking system 106 may notify the user whenever a third-party system attempts to access information associated with the user and require the user to provide verification that access should be allowed before proceeding.

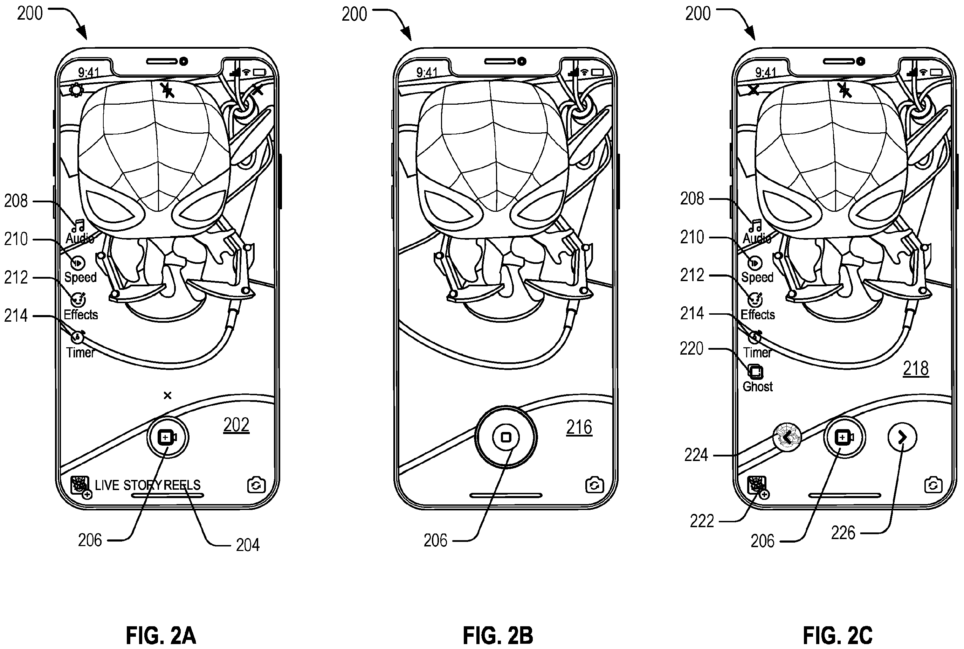

FIGS. 2A - 2C illustrate an example device 200 including user interfaces 202, 216, and 218 for creating a video content item. The example device 200 may correspond to one or more of the devices 104 of FIG. 1. For example, FIG. 2A illustrates the example device 200 including a user interface 202 at which the user 102(1) may initiate creation of a video content item. As discussed above, the social network application 112 may comprise video content creation functionality, such as accessing a camera of the computing device 104(1). Thus, upon selection of a control 204, the user interface 202 may include a representation of an environment based on information received from the camera of the computing device 104(1). The user interface 202 may also include a control 206 that, when selected, causes a video clip to be recorded.

In some examples, the user interface 202 may include various selectable controls to allow for video customization. The various selectable controls may allow the user 102(1) to choose, prior to recording the video content item, one or more customizations to apply to the video content item (e.g., as the video content item is being recorded). The selectable controls may include an audio icon 208, a speed icon 210, an effects icon 212, and a timer icon 214, to name a few examples. The audio icon 208 may, upon selection, allow the user 102(1) to select an audio track to play for at least a portion of the video content item. Upon selection of the speed icon 210, the user 102(1) may select a speed at which to record the video content item (e.g., 0.3x, 0.5x, 1x, 2x, 3x, etc.). In some cases, the user 102(1) may add effects to the video content item by selecting the effects icon 212. As described above with respect to FIG. 1, the user 102(1) may select from saved effects, trending effects, and so on. Upon selection of the timer icon 214, the user 102(1) may choose a predetermined length of the video content item (e.g., 1.0 second, 2.5 seconds, 5.0 seconds, etc.), prior to recording the video content item.

Upon selection of the control 206, a user interface 216 illustrated in FIG. 2B may be presented to the user 102(1) via the example device 200 and begin recording the video content item, where the user interface 216 includes what is being recorded for the video content item from the camera.

Upon deselection of the control 206 in the user interface 216, the user interface 218 illustrated in FIG. 2C may be presented to the user. In some examples, the user 102(1) may select the control 206 multiple times to create multiple video clips to be included in the video content item. The multiple video clips may be stitched together to create one continuous video content item. Similar to FIG. 2A, the user interface 218 may include multiple selectable controls to add a customization to a second (and/or third, fourth, fifth, etc.) video clip. The user interface 218 may also include a ghost icon 220, which may present an overlay of a frame (e.g., a first frame, a last frame, etc.) from the first video clip over the camera feed. The overlay presented in response to selection of the ghost icon 220 may enable the user to align an object a first video clip with an object in the second video clip, so that the object appears in a same location as the video content item transitions between the video clips.

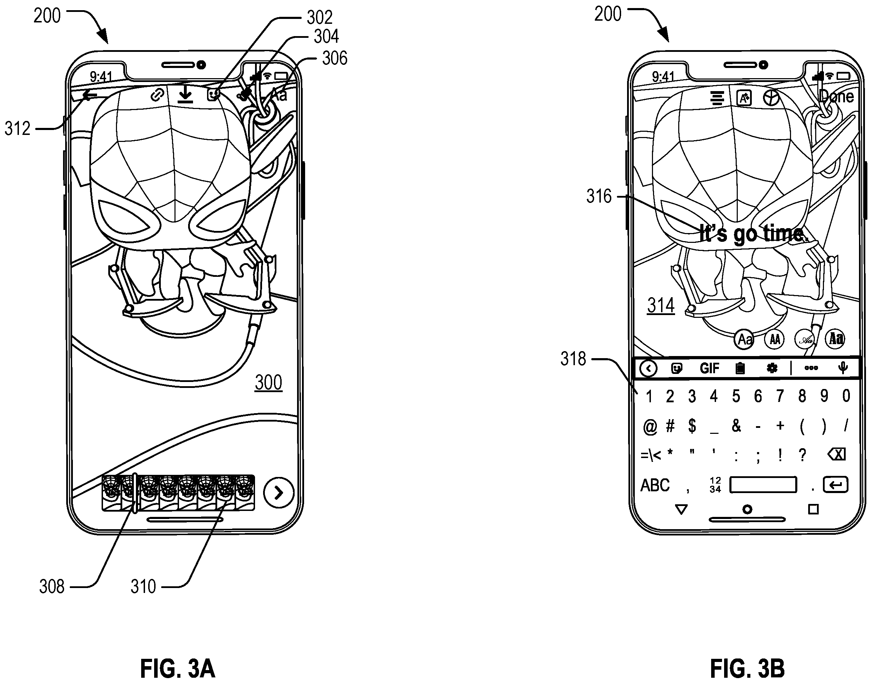

In some cases, the user interface 218 may include a camera icon 222, that when selected, enables the user 102(1) to upload a previously taken photo or video from a camera roll of the example device 200, from cloud storage, and the like. Additionally, the user interface 218 may include a playback icon 224 and a next icon 226, selection of which causes presentation of additional interfaces usable to playback and share the video content item, respectively. Details of playback and sharing of the video content item are discussed in more detail in relation to FIGS. 3A and 3B below.

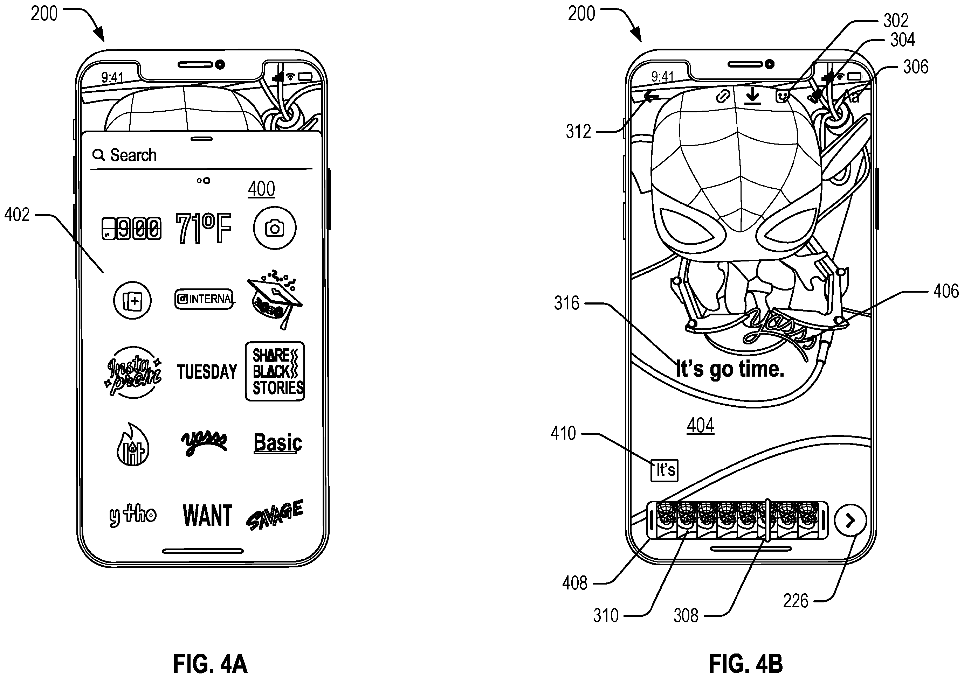

FIGS. 3A, 3B, 4A, and 4B illustrate the example device 200 including user interfaces 300, 314, 400, and 404 during customization of the video content item. FIG. 3A illustrates an example user interface 300 which may be displayed in response to the user selection of the playback icon 224, illustrated in FIG. 2C. In some examples, the user interface 300 may include selectable controls which may allow the user to customize the recorded video content item. For example, the user interface may include a GIF icon 302 in which, upon selection, allows the user 102(1) to add one or more GIFs to the video content item; a draw icon 304 in which, upon selection, allows the user 102(1) to draw on the video content item (e.g., by touching a touch-screen of the example device 200 using a stylus or a finger); and a text icon 306 in which, upon selection, allows the user 102(1) to add a text overlay to the video content item.

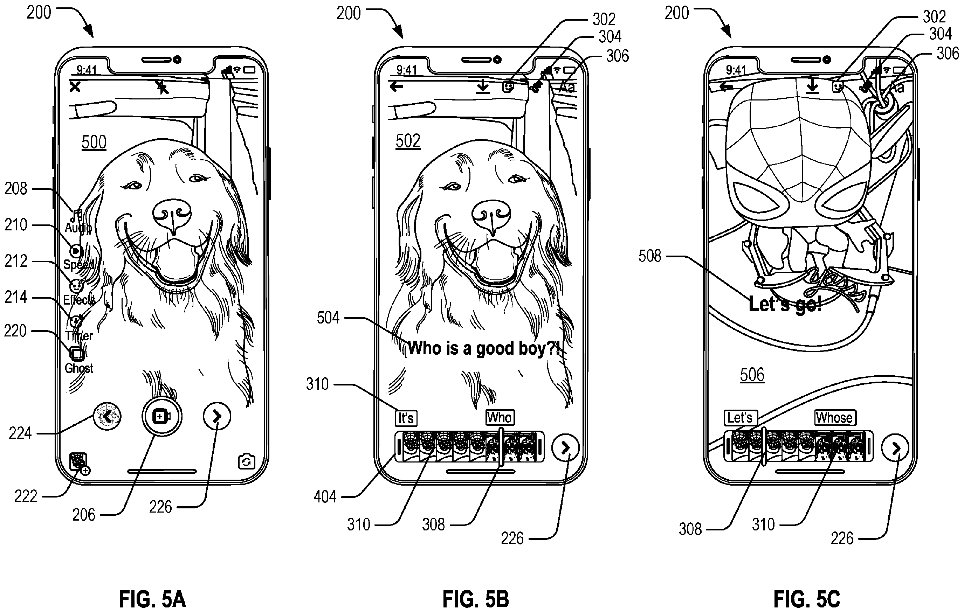

Additionally or alternatively, the user interface 300 may include a control 308 which may be located on a preview 310 of the video content item. In some examples, the user 102(1) may move the control 308 to the left and/or to the right (e.g., via a touch input), to select a frame of the video content item displayed in the user interface 300. The user interface 300 may also include a back icon 312 which, upon selection, may present the user with user interface 202, allowing the user 102(1) to record one or more new video clips to include in the video content item. This feature is discussed in further detail in FIGS. 5A-5C below.

FIG. 3B illustrates the example device 200 including a user interface 314 after the user 102(1) has added a text customization 316. In some examples, upon selecting the text icon 306, the user interface 314 may display a keyboard 318 in which the user 102(1) may enter a text input, resulting in the text customization 316. The user interface 314 may also allow for modifications to the text customization 316 such as changing a font of the text customization 316, changing a background color in an area surrounding the text customization 316, changing a positioning of the text customization 316, adding an emphasis of the text customization 316 (e.g., bold, underline, etc.), and so forth.

FIG. 4A illustrates the example device 200 including a user interface 400 which may be displayed in response to the user 102(1) selecting the GIF icon 302, illustrated in FIG. 3A. In some examples, upon selection of the GIF icon 302, the user interface 400 may display a list of GIFs 402 that the user 102(1) may add to the video content item. In some cases, the user interface 400 may also include a search bar which provides functionality for the user 102(1) to search for specific GIFs.

FIG. 4B illustrates the example device 200 including a user interface 404 which may be displayed in response to an input of the text customization 316 and a selection of a GIF 406 for inclusion in the video content item. In examples, the user interface 400 may include a control 408 which may provide functionality for the user 102(1) to determine a time at which the customization appears and/or disappears during the video content item. In the illustrated example, the user 102(1) has selected the text customization 316, as indicated by a text preview 410. The text preview 410 may display the first word or words of the text customization 316 to allow the user 102(1) to quickly and easily identify a text customization when the video content item includes multiple text customizations.

In examples, the position of the text preview 410 in relation to the length of the preview 310 may indicate a time at which the text customization 316 may appear. Additionally, a duration that the text customization 316 appears during the video content item may be reflected by a portion of the preview encompassed within the control 408. For example, because the entire duration of the preview 310 is located within the control 408, the text customization 316 may be visible for the full duration of the video content item. However, the user 102(1) may slide the control 408 to the left and/or right, thereby shortening and/or lengthening the area of the preview 310 covered by the control 408, to alter when the text customization 316 may appear and/or disappear from view during playback of the video content item. By sliding the right end of the control 408 to the left, the text customization 316 may appear at the beginning of the video content item and disappear at a point in the video content item corresponding to where the right end of the control 408 was moved. Additionally or alternatively, by sliding the left end of the control 408 to the right, the text customization 316 may not appear until a point in the video content item corresponding to where the left end of the control 408 was moved.

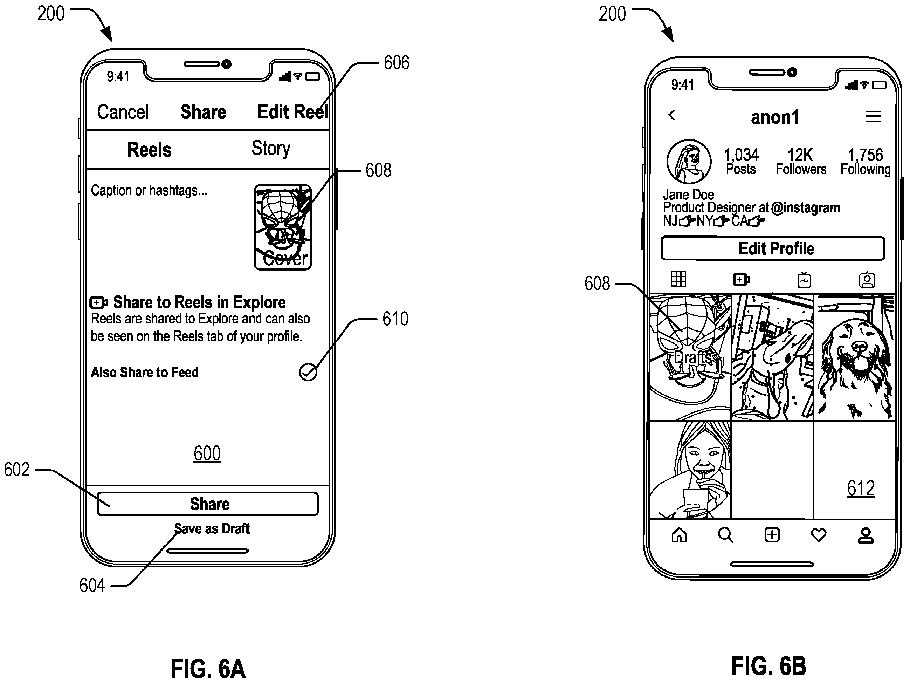

In this way, the user 102(1) may further customize the video content item by specifying points at which the customizations may appear and/or disappear throughout the video content item. Once the user 102(1) is satisfied with the customizations of the video content item, the user 102(1) may select a next icon 226 included in the user interface 404 to proceed to share the video content item with a user account of a second user 102(2) associated with the social networking application 112 and/or save the video content item as a draft, as discussed in more detail in relation to FIGS. 6A and 6B below.

FIGS. 5A-5C illustrate the example device 200 including user interfaces 500, 502, and 506 for altering the video content item without altering existing customizations. In some examples, the user 102(1) may shorten, lengthen, or otherwise modify the duration of the video content item. As described above, the user 102(1) may add video clips, remove a portion of a video clip and/or an entire video clip, and so forth to shorten or lengthen the duration of the video content item. The operations illustrated in FIGS. 5A-5C may, in some examples, be performed after the video content item is saved as a draft, as discussed in more detail in relation to FIG. 6A below.

FIG. 5A illustrates an example user interface 500 which may be displayed in response to the user 102(1) selecting the back icon 312, illustrated in FIGS. 3A and 4B, to record a second (or third, fourth, fifth, etc.) video clip to be included in the video content item. Similar to the user interface 218, the user interface 500 may allow for video customization by the selection of the audio icon 208, the speed icon 210, the effects icon 212, the timer icon 214, and/or the ghost icon 220, to name a few examples. As discussed in relation to FIG. 2C, the user 102(1) may select the control 206 multiple times to create multiple video clips to be included in the video content item. If satisfied with the second video clip, the user 102(1) may select the next icon 226 to customize the video content item.

FIG. 5B illustrates an example user interface 502 upon further customization of the video content item, while preserving the customizations performed in FIGS. 3B-4B. As depicted in the present illustration, the user 102(1) has included a text customization 504. As described above with respect to FIG. 3A, the user interface 502 may include the preview control 308, which may be located on the preview 310 of the video content item. The user interface 502 may also include one or more text previews of text customizations from other video clips that may be included in the video content item but may not be previewed by the frame displayed in the user interface 502, such as text preview 310 corresponding to the text customization 316.

FIG. 5C illustrates the example device 200 including a user interface 506. Although the user has added a second video clip (as indicated by the frame displayed in the user interface 502) to the video content item in addition to the first video clip (as indicated by the frame displayed in the user interface 506), the customizations made to the first video clip remain included after the second video clip has been added. Therefore, the user can edit and/or remove customizations that were added to the first video clip prior to including the second video clip in the video content item.

For instance, the user 102(1) has altered the text customization 316 from "It's go time" to the new text customization 508 "Let's go!" while the second text customization 504 remains unchanged. In some examples, although not depicted here, upon selection of the text preview 310, the user 102(1) may be presented with the keyboard 318 to edit or delete the text customization 316. Similar to the user interface 404, the user interface 502 may allow for modifications to the new text customization 508 such as changing a font of the new text customization 508, a background color in an area surrounding the new text customization 508, a positioning of the new text customization 508, an emphasis of the new text customization 508 (e.g., bold, underline, etc.) and so forth.

Additionally or alternatively, the user 102(1) may move the preview control 308 such that the preview control 308 is located on the portion of the preview 310 of the video content item which the user 102(1) desires to edit, thus causing the corresponding frame of the video content item to appear in the user interface 506. The user 102(1) may, in examples, select a customization included in the video content item to edit and/or delete. In some cases, the user 102(1) may desire to add additional customizations by, for example, the selection of the GIF icon 302, the draw icon 304, and/or the text icon 306. In this way, the user 102(1) may make edits to prior video clips in the video content item without losing edits made to subsequent video clips.

FIG. 6A illustrates the example device 200 including a user interface 600 which may be displayed in response to selection of the next icon 226. In some examples, once the user 102(1) selects the next icon 226, the user interface 600 may present options to share the video content item with the social network applications 112 (by selecting a share icon 602) and/or save the video content item as a draft (by selecting a save as draft icon 604), as discussed below in FIG. 6B. In some cases, the user 102(1) may decide to return to editing the video content item (by selecting an edit Reel icon 606). In some examples, the user 102(1) may select a thumbnail image 608 to identify the video content item. The thumbnail image 608 may include a frame from the video content item and/or a photo chosen from the camera roll of the computing device associated with the user 102(1).

Upon the selection of the share icon 602, the social networking system 106 may provide the video content item to a user account of a second user 102(2) (e.g., a user account associated with the social network application 112 installed on the computing device 104(2)). In some examples, the user 102(1) may select an also share to feed icon 610, that when selected causes the social networking system 106 to share the video content item to the feed of the user 102(1).

FIG. 6B illustrates the example device 200 including a user interface 612 depicting a profile page associated with the user account of the user 102(1) upon saving the video content item as a draft. In some examples, the profile page associated with the user account of the user 102(1) may contain a Draft Library page, which may contain items of video content previously created by the user 102(1). The Draft Library may display the items of video content in a grid, where each section of the grid contains the thumbnail image 608 of the corresponding video content item for ease of selection and viewing. In some examples, items of video content saved as a draft may be labeled as a Draft (e.g., with text overlay indicating "Draft") and may not be visible to other user accounts, such as user accounts of users 102(2) - 102(n) on the social networking system 106. In some examples, the user 102(1) may save multiple drafts of video content items to be accessed at a later time. Upon selection of the thumbnail image 608 of the corresponding saved video content item, the social network application 112 may provide the user 102(1) with functionality to further edit the draft video content item.

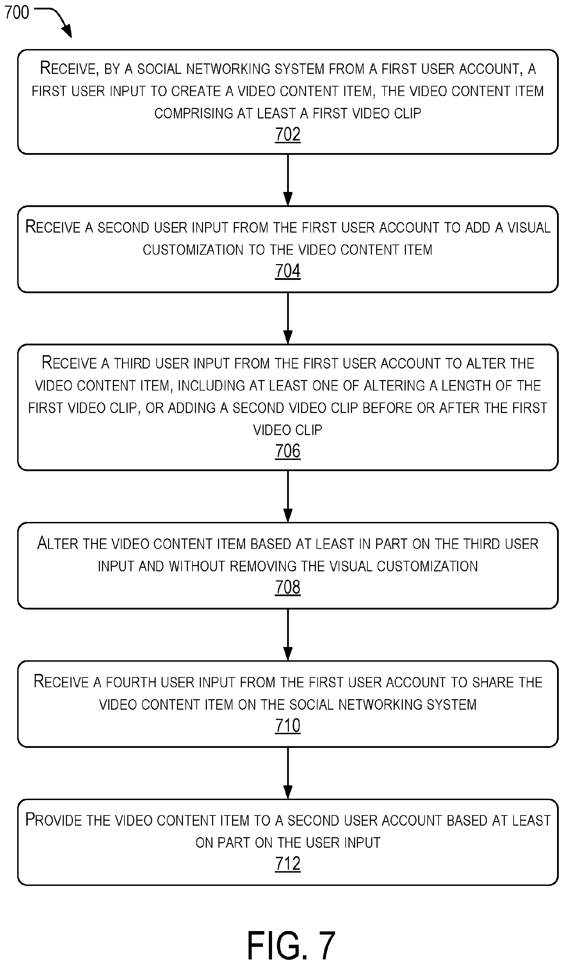

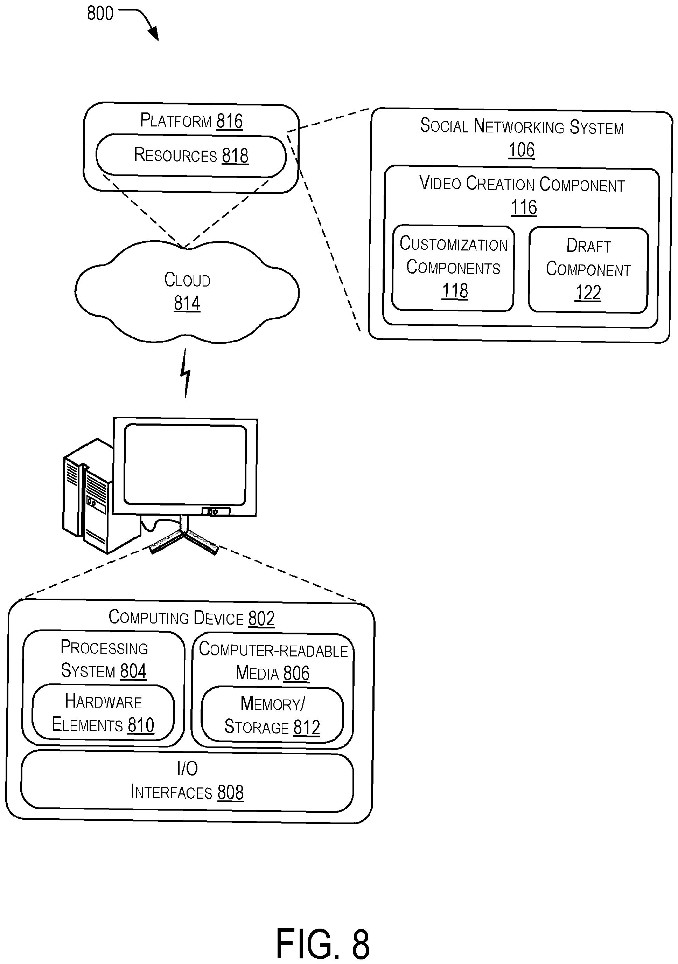

FIG. 7 illustrates an example process 700 outlining an example method for post capture editing and drafting on a social networking system using the techniques described herein. Various methods are described with reference to the example system of FIG. 1 and/or the user interfaces of FIGS. 2-6 for convenience and ease of understanding. However, the methods described are not limited to being performed using the systems of FIG. 1 or FIG. 8 and/or the user interfaces of FIGS. 2-6 and may be implemented using systems and devices other than those described herein.

The method described herein represents a sequence of operations that can be implemented in hardware, software, or a combination thereof. In the context of software, the blocks represent computer-executable instructions stored on one or more computer-readable storage media that, when executed by one or more processors, perform the recited operations. Generally, computer-executable instructions include routines, programs, objects, components, data structures, and the like that perform particular functions or implement particular abstract data types. The order in which the operations are described is not intended to be construed as a limitation, and any number of the described operations can be combined in any order and/or in parallel to implement the process. In some examples, one or more operations of the method may be omitted entirely. Moreover, the method described herein can be combined in whole or in part with other methods.

An operation 702 includes receiving, from a first user account on a social networking system 102, an input to create a video content item comprising at least a first video clip. For example, the social networking system 102 may receive a video clip associated with the user 102(1) via the computing device 104(1). The video clip may, in examples, be a previously recorded video clip taken from the camera roll of the computing device 104(1). Additionally or alternatively, the video clip may be directly recorded to the social networking system 106 using the camera of the computing device 104(1). The video content item may include multiple video clips, which may be stitched together to create one continuous video clip to be included in the video content item.

An operation 704 includes receiving a second user input from the first user account to add a visual customization to the video content item. In some examples, the video creation component 116 may supply visual customizations from the customization components 118 to the social network application 112 for inclusion in a video content item. Visual customizations may take a variety of forms, such as text overlay, stickers, GIFs, AR effects, and so forth.

An operation 706 includes receiving a third user input from the first user account to alter the video content item, including at least altering the first video clip or adding a second video clip before or after the first video clip. In some examples, the user 102(1) may want to change the video clip, and/or add another video clip, after adding a visual customization to the video content item, in order to prepare the video content item for sharing with other users 102(2) - 102(n). In some examples, the draft component 122 may save the video content item before the user 102(1) alters the first video clip and/or adds another video clip with the visual customization added in the operation 704.

An operation 708 includes altering the video content item based at least in part on the third user input and without removing the visual customization. For example, once the user 102(1) has viewed the draft video content item, the user 102(1) may choose to shorten or lengthen at least one video clip included in the video content item. Additionally or alternatively, the user 102(1) may add a new (e.g., second, third, fourth, etc.) video clip to the video content item.

An operation 710 includes receiving a fourth user input from the first user account to share the video content item on the social networking system. In some examples, the user 102(1) may have the option to add a "caption" and/or a "hashtag" to the video content item before sharing.

An operation 712 includes providing the video content item to a second user account based at least in part on the fourth user input. In some examples, the social network application 112 may display the video content item as part of a "Reels View" on a "Feed" of the second user account. Additionally or alternatively, the social network application 112 may allow users to "like" or "comment" on the video content item.

### EXAMPLE SYSTEM AND DEVICE

FIG. 8 illustrates an example system generally at 800 that includes an example computing device 802 that is representative of one or more computing systems and/or devices that may implement the various techniques described herein. This is illustrated through the inclusion of the video creation component 116, the customization components 118, and the draft component 122. The computing device 802 may be, for example, a server of a service provider, a device associated with a client (e.g., a client device), an on-chip system, and/or any other suitable computing device or computing system.

The example computing device 802 as illustrated includes a processing system 804, one or more computer-readable media 806, and one or more I/O interface 808 that are communicatively coupled, one to another. Although not shown, the computing device 802 may further include a system bus or other data and command transfer system that couples the various components, one to another. A system bus can include any one or combination of different bus structures, such as a memory bus or memory controller, a peripheral bus, a universal serial bus, and/or a processor or local bus that utilizes any of a variety of bus architectures. A variety of other examples are also contemplated, such as control and data lines.

The processing system 804 is representative of functionality to perform one or more operations using hardware. Accordingly, the processing system 804 is illustrated as including hardware element 810 that may be configured as processors, functional blocks, and so forth. This may include implementation in hardware as an application specific integrated circuit or other logic device formed using one or more semiconductors. The hardware elements 810 are not limited by the materials from which they are formed or the processing mechanisms employed therein. For example, processors may be comprised of semiconductor(s) and/or transistors (e.g., electronic integrated circuits (ICs)). In such a context, processor-executable instructions may be electronically-executable instructions.

The computer-readable storage media 806 is illustrated as including memory/storage 812. The memory/storage 812 represents memory/storage capacity associated with one or more computer-readable media. The memory/storage 812 may include volatile media (such as random access memory (RAM)) and/or nonvolatile media (such as read only memory (ROM), Flash memory, optical disks, magnetic disks, and so forth). The memory/storage 812 may include fixed media (e.g., RAM, ROM, a fixed hard drive, and so on) as well as removable media (e.g., Flash memory, a removable hard drive, an optical disc, and so forth). The computer-readable media 806 may be configured in a variety of other ways as further described below.

Input/output interface(s) 808 are representative of functionality to allow a user to enter commands and information to computing device 802, and also allow information to be presented to the user and/or other components or devices using various input/output devices. Examples of input devices include a keyboard, a cursor control device (e.g., a mouse), a microphone, a scanner, touch functionality (e.g., capacitive or other sensors that are configured to detect physical touch), a camera (e.g., which may employ visible or non-visible wavelengths such as infrared frequencies to recognize movement as gestures that do not involve touch), and so forth. Examples of output devices include a display device (e.g., a monitor or projector), speakers, a printer, a network card, tactile-response device, and so forth. Thus, the computing device 802 may be configured in a variety of ways as further described below to support user interaction.

Various techniques may be described herein in the general context of software, hardware elements, or program modules. Generally, such modules include routines, programs, objects, elements, components, data structures, and so forth that perform particular tasks or implement particular abstract data types. The terms "module," "functionality," "logic," and "component" as used herein generally represent software, firmware, hardware, or a combination thereof. The features of the techniques described herein are platform-independent, meaning that the techniques may be implemented on a variety of commercial computing platforms having a variety of processors.

An implementation of the described components and techniques may be stored on and/or transmitted across some form of computer-readable media. The computer-readable media may include a variety of media that may be accessed by the computing device 802. By way of example, and not limitation, computer-readable media may include "computer-readable storage media" and "computer-readable transmission media."

"Computer-readable storage media" may refer to media and/or devices that enable persistent and/or non-transitory storage of information in contrast to mere signal transmission, carrier waves, or signals per se. Thus, computer-readable storage media refers to non-signal bearing media. The computer-readable storage media includes hardware such as volatile and non-volatile, removable and non-removable media and/or storage devices implemented in a method or technology suitable for storage of information such as computer-readable instructions, data structures, program modules, logic elements/circuits, or other data. Examples of computer-readable storage media may include, but are not limited to, RAM, ROM, EEPROM, flash memory or other memory technology, CD-ROM, digital versatile disks (DVD) or other optical storage, hard disks, magnetic cassettes, magnetic tape, magnetic disk storage or other magnetic storage devices, or other storage device, tangible media, or article of manufacture suitable to store the desired information and which may be accessed by a computer.

"Computer-readable transmission media" may refer to a medium that is configured to transmit instructions to the hardware of the computing device 802, such as via a network. Computer-readable transmission media typically may transmit computer-readable instructions, data structures, program modules, or other data in a modulated data signal, such as carrier waves, data signals, or other transport mechanism. Computer-readable transmission media also include any information delivery media. The term "modulated data signal" means a signal that has one or more of its characteristics set or changed in such a manner as to encode information in the signal. By way of example, and not limitation, computer-readable transmission media include wired media such as a wired network or direct-wired connection, and wireless media such as acoustic, radio frequency (RF), infrared, and other wireless media.

As previously described, hardware elements 810 and computer-readable media 806 are representative of modules, programmable device logic and/or device logic implemented in a hardware form that may be employed in some embodiments to implement at least some aspects of the techniques described herein, such as to perform one or more instructions. Hardware may include components of an integrated circuit or on-chip system, an application-specific integrated circuit (ASIC), a field-programmable gate array (FPGA), a complex programmable logic device (CPLD), and other implementations in silicon or other hardware. In this context, hardware may operate as a processing device that performs program tasks defined by instructions and/or logic embodied by the hardware as well as a hardware utilized to store instructions for execution, e.g., the computer-readable storage media described previously.

Combinations of the foregoing may also be employed to implement various techniques described herein. Accordingly, software, hardware, or executable modules may be implemented as one or more instructions and/or logic embodied on some form of computer-readable storage media and/or by one or more hardware elements 810. The computing device 802 may be configured to implement particular instructions and/or functions corresponding to the software and/or hardware modules. Accordingly, implementation of a module that is executable by the computing device 802 as software may be achieved at least partially in hardware, e.g., through use of computer-readable storage media and/or hardware elements 810 of the processing system 804. The instructions and/or functions may be executable/operable by one or more articles of manufacture (for example, one or more computing devices 802 and/or processing systems 804) to implement techniques, modules, and examples described herein.

The techniques described herein may be supported by various configurations of the computing device 802 and are not limited to the specific examples of the techniques described herein. This functionality may also be implemented all or in part through use of a distributed system, such as over a "cloud" 814 via a platform 816 as described below.

The cloud 814 includes and/or is representative of a platform 816 for resources 818. The platform 816 abstracts underlying functionality of hardware (e.g., servers) and software resources of the cloud 814. The resources 818 may include applications and/or data that can be utilized while computer processing is executed on servers that are remote from the computing device 802. Resources 818 can also include services provided over the Internet and/or through a subscriber network, such as a cellular or Wi-Fi network.

The platform 816 may abstract resources and functions to connect the computing device 802 with other computing devices. The platform 816 may also be scalable to provide a corresponding level of scale to encountered demand for the resources 818 that are implemented via the platform 816. Accordingly, in an interconnected device embodiment, implementation of functionality described herein may be distributed throughout multiple devices of the system 800. For example, the functionality may be implemented in part on the computing device 802 as well as via the platform 816 which may represent a cloud computing environment.

### Conclusion

Although the discussion above sets forth example implementations of the described techniques, other architectures may be used to implement the described functionality and are intended to be within the scope of this disclosure. Furthermore, although the subject matter has been described in language specific to structural features and/or methodological acts, it is to be understood that the subject matter defined in the appended claims is not necessarily limited to the specific features or acts described. Rather, the specific features and acts are disclosed as exemplary forms of implementing the claims.

## Claims

1. A method comprising:
receiving, by a social networking system from a first user account, a first user input to create a video content item, the video content item comprising at least a first video clip;
receiving a second user input from the first user account to add a visual customization to the video content item;
receiving a third user input from the first user account to alter the video content item, including at least one of:
altering a length of the first video clip, or
adding a second video clip before or after the first video clip,
altering the video content item based at least in part on the third user input and without removing the visual customization;
receiving a fourth user input from the first user account to share the video content item on the social networking system; and
providing the video content item to a second user account based at least in part on the fourth user input.

2. The method of claim 1, wherein the visual customization comprises one or more of an augmented reality (AR) effect, a graphic interchange format (GIF), a sticker, or a text overlay.

3. The method of claim 1, further comprising:
receiving a fifth user input to save the video content item as a draft prior to the fourth user input;
storing the video content item comprising the video content item and the visual customization as the draft;
receiving a sixth user input to edit the draft; and
providing the draft comprising the video content item and the visual customization for editing or sharing by the first user account.

4. The method of claim 3, wherein the sixth user input to edit the draft includes removing at least a portion of the visual customization.

5. The method of claim 1, wherein the visual customization is one of multiple visual customizations supplied by the social networking system.

6. The method of claim 1, wherein the visual customization is selected to appear for a portion of the first video clip that is less than an entirety of the first video clip.

7. The method of claim 1, further comprising:
receiving a fifth user input to save the video content item as a draft prior to the fourth user input; and
receiving a sixth user input to select a thumbnail image of the draft;
wherein the thumbnail image is at least one of a frame from the video content item or an image retrieved from storage.

8. A system comprising:
one or more processors; and
one or more computer-readable media storing instructions that, when executed by the one or more processors, configure the system to perform the method of any of claims 1-7.

9. One or more computer-readable media storing instructions that, when executed by one or more processors, configure the one or more processors to perform the method of any of claims 1-7.
